Europäisches Patentamt

European Patent Office

Office européen des brevets

(11) Veröffentlichungsnummer: **0 309 597**
**A1**

## (12) EUROPÄISCHE PATENTANMELDUNG

(21) Anmeldenummer: 87114159.4

(22) Anmeldetag: 29.09.87

(51) Int. Cl.4: **F16L 13/02 , F16L 58/18**

(43) Veröffentlichungstag der Anmeldung:
05.04.89 Patentblatt 89/14

(84) Benannte Vertragsstaaten:
**DE FR NL SE**

(71) Anmelder: **Blome GmbH & Co.**
**Kommanditgesellschaft**
**Werderstrasse 53a**
**D-4690 Herne 1(DE)**

(72) Erfinder: **Blome, Peter**
**Körnerstrasse 25**
**D-4690 Herne 1(DE)**

(74) Vertreter: **Rieder, Hans-Joachim, Dr. et al**
**Corneliusstrasse 45 Postfach 11 04 51**
**D-5600 Wuppertal 11(DE)**

(54) **Verbindungszonenbeschichtung von miteinander verschweissten Stahlrohren.**

(57) Die Erfindung betrifft ein Verfahren zur Beschichtung der Verbindungszone zweier miteinander verschweißter Stahlrohre (1), welche jeweils eine von der Schweißzone beabstandete, eine thermoplastische Schicht (9) aufweisende Kunststoffbeschichtung (3) besitzen und schlägt für einen ausgezeichneten Korrosionsschutz der Verbindungszone vor, daß nach dem Schweißvorgang unter Wärmebeaufschlagung eine Duroplastbeschichtung (13) auf den Rohrverbundbereich aufgebracht wird, die eine unterhalb der thermoplastischen Schicht (9) der Kunststoffbeschichtung (3) angeordnete, aus der thermoplastischen Schicht (9) herausragende, duroplastische Schicht (7) im Bereich des herausragenden Randes und die Schweißzone sowie deren angrenzende metallische Rohroberfläche jedes Stahlrohres (1) abdeckt, daß ferner anschließend eine Erwärmung der gesamten Verbindungszone erfolgt und daß dann eine Schrumpffolie (17) unter Zwischenschaltung eines Klebers (15) in überlappender Lage zu der Kunststoffbeschichtung (3) jedes Stahlrohres (1) auf die Duroplastbeschichtung (13) zur Abdeckung der Verbindungszone aufgeschrumpft wird.

FIG.3

Blome

## Verbindungszonenbeschichtung von miteinander verschweißten Stahlrohren

Die Erfindung betrifft ein Verfahren zur Beschichtung der Verbindungszone zweier miteinander verschweißter Stahlrohre, welche jeweils eine von der Schweißzone beabstandete, eine thermoplastische Schicht aufweisende Kunststoffbeschichtung besitzen.

Erdverlegte oder Off-Shore-verlegte Rohrleitungen bestehen aus einer Vielzahl von miteinander verschweißten Stahlrohren. Dabei ist es bekannt, die Verbindungszone zweier verschweißter Stahlrohre mittels einer Beschichtung gegen Korrosion zu schützen. Der nicht zur Verbindungszone gehörende Abschnitt jedes Rohrkörpers wird ebenfalls durch eine Kunststoffbeschichtung geschützt, die eine thermoplastische Schicht aufweisen kann. Da der Korrosionsschutz im Verbindungsbereich der Rohre nicht bei der Rohrherstellung sondern erst bei den Verlegungsarbeiten aufgebracht werden muß, ist diese Zone besonders störanfällig, da auf der Baustelle nicht immer optimale Bedingungen vorliegen. Ferner stellt die Beschichtung im Verbindungszonenbereich der Stahlrohre hinsichtlich der Korrosion eine besondere Schwachstelle dar, da die aufgebrachte Beschichtung nicht immer die geforderte Spaltenfreiheit zur Stahlrohroberfläche aufweist, so daß Feuchtigkeit und dergleichen eindringen kann.

Der Erfindung liegt daher die Aufgabe zugrunde, ein Verfahren der eingangs genannten Art aufzuzeigen, das zu einer einwandfreien Abdichtung der Verbindungszone von miteinander verschweißten Stahlrohren führt und demzufolge einen ausgezeichneten Korrosionsschutz bietet. Überdies soll die Beschichtung der Verbindungszone auf relativ einfache Weise aufgebracht werden können.

Diese Aufgabe wird erfindungsgemäß dadurch gelöst, daß nach dem Schweißvorgang unter Wärmebeaufschlagung eine Duroplastbeschichtung auf den Rohrverbundbereich aufgebracht wird, die eine unterhalb der thermoplastischen Schicht der Kunststoffbeschichtung angeordnete, aus der thermoplastischen Schicht herausragende duroplastische Schicht im Bereich des hervorragenden Randes und die Schweißzone sowie deren daran angrenzende metallische Rohroberfläche jedes Stahlrohres abdeckt, daß ferner anschließend eine Erwärmung der gesamten Verbindungszone erfolgt und daß dann eine Schrumpffolie unter Zwischenschaltung eines Klebers in überlappender Lage zu der Kunststoffbeschichtung jedes Stahlrohres auf die Duroplastbeschichtung zur Abdeckung der Verbindungszone aufgeschrumpft wird. Diese besondere Schichtenausbildung führt zu einem ausgezeichneten Korrosionsschutz der Verbindungszone. Dabei ist insbesondere von Vorteil, daß zunächst die metallische Rohroberfläche, die sich beidseitig der Schweißzone jedes Rohres anschließt, von der Duroplastbeschichtung überdeckt ist. Entfernt man sich weiter in Rohrlängsrichtung von der Schweißzone, so ist ersichtlich, daß die Duroplastbeschichtung auch die auf dem Stahlrohr vorhandene duroplastische Schicht über einen Teilbereich abdeckt. Ferner ist die Duroplastbeschichtung wiederum unter Zwischenschaltung des genannten Klebers von der aufgeschrumpften Folie abgedeckt, die ihrerseits innig mit den thermoplastischen Schichten der auf den Stahlrohren vorhandenen Kunststoffbeschichtungen randseitig verbunden ist. Diese erfindungsgemäß ausgebildete stufenförmige Abdeckung der Rohrverbindungszone bildet eine dichte Schutzkapsel und ist überdies auch unter Baustellenbedingungen auf relativ einfache Weise aufbringbar.

Nach einer Weiterbildung der Erfindung ist vorgesehen, daß als Duroplastbeschichtung eine Epoxidharz-Pulverbeschichtung oder ein flüssiges Epoxidharz aufgebracht wird.

Die Verfahrensweise kann so erfolgen, daß vor der Wärmebeaufschlagung und dem Aufbringen der Duroplastbeschichtung der Rohrverbundbereich sandgestrahlt wird, das heißt, daß die duroplastischen Schichten und die metallischen Rohroberflächen sowie die Schweißzonen beider Rohre sandgestrahlt werden, so daß die Duroplastbeschichtung auf eine einwandfrei saubere, leicht aufgerauhte Oberfläche aufgebracht wird, wodurch ein ausgezeichneter Halt erzielbar ist.

Vorteilhaft ist es, wenn als Schrumpffolie ein strahlenvernetztes, modifiziertes Polyäthylen, vorzugsweise HD-Polyäthylen, aufgebracht wird.

Als Kleber für die Befestigung der Schrumpffolie wird vorzugsweise Hot-Melt verwendet.

Montagetechnisch einfach ist es, wenn eine Schrumpffolie verwendet wird, die herstellungsmäßig bereits mit einer aktivierbaren Hot-Melt-Beschichtung versehen ist.

Für die duroplastische Schicht der Kunststoffbeschichtung der Stahlrohre wird insbesondere eine Epoxid-Harzschicht eingesetzt. Als thermoplastische Schicht der Kunststoffbeschichtung der Stahlrohre kommt mit Vorzug eine Polyäthylen-Schicht oder eine Polypropylen-Schicht zum Einsatz. Zwischen der duroplastischen Schicht und der thermoplastischen Schicht der Kunststoffbeschichtung der Stahlrohre wird bevorzugt ein Klebstoff, insbesondere ein Co-Polymer aufgebracht.

Die Wärmebeaufschlagung des Rohrverbundbereiches läßt sich besonders einfach durch elektrisch-induktive Erhitzung realisieren.

Im Gegensatz dazu ist es bei der Erwärmung der gesamten Verbindungszone von Vorteil, wenn hier ein elektrischer Infra roterwärmungsvorgang, vorzugsweise mit kontrollierter Wellenlänge, erfolgt.

Um einen kohäsiven Verbund zum Kleber zu erzielen, wird bei der Duroplastbeschichtung ein entsprechend abgestimmt formulierter Härter verwendet.

Vorteilhaft ist es, wenn eine als nahtloser Folienschlauch ausgebildete Schrumpffolie eingesetzt wird.

Überdies betrifft die Erfindung mit Kunststoffbeschichtung versehene, miteinander verschweißte Stahlrohre, deren von der Schweißzone beabstandete Kunststoffbeschichtung eine thermoplastische Schicht aufweist, wobei die Kunststoffbeschichtung jedes Rohres aus einer auf das Stahlrohr aufgebrachten duroplastischen Schicht und der unter Zwischenschaltung eines Klebstoffes auf dieser aufgebrachten thermoplastischen Schicht besteht, und wobei die duroplastische Schicht in Rohrlängs richtung von der Schweißzone jedes Stahlrohres beabstandet ist und in Längsrichtung auf die Schweißzone die Klebstoff-Schicht und die thermoplastische Schicht überragt und daß eine Duroplastbeschichtung vorgesehen ist, die die Schweißzone, die anschließende metallische Rohroberfläche und die hervorstehende duroplastische Schicht beider Stahlrohre abdeckt und wobei auf die Duroplastbeschichtung unter Zwischenschaltung eines Klebers eine Schrumpffolie aufgeschrumpft ist, die die thermoplastischen Schichten beider Stahlrohre randseitig überlappt.

Die Zeichnungen veranschaulichen die Erfindung an Hand eines Ausführungsbeispieles und zwar zeigt:

Fig. 1 eine Ansicht zweier miteinander zu verschweißender, mit Kunststoffbeschichtung versehene Stahlrohre,

Fig. 2 einen Längsschnitt durch den Verbindungsbereich der Stahlrohre, die noch nicht miteinander verbunden sind und

Fig. 3 einen Längsschnitt durch den Verbindungsbereich der beiden verschweißten Stahlrohre gemäß Fig. 2, wobei der Verbindungsbereich mit einer Korrosionsschutzbeschichtung versehen ist.

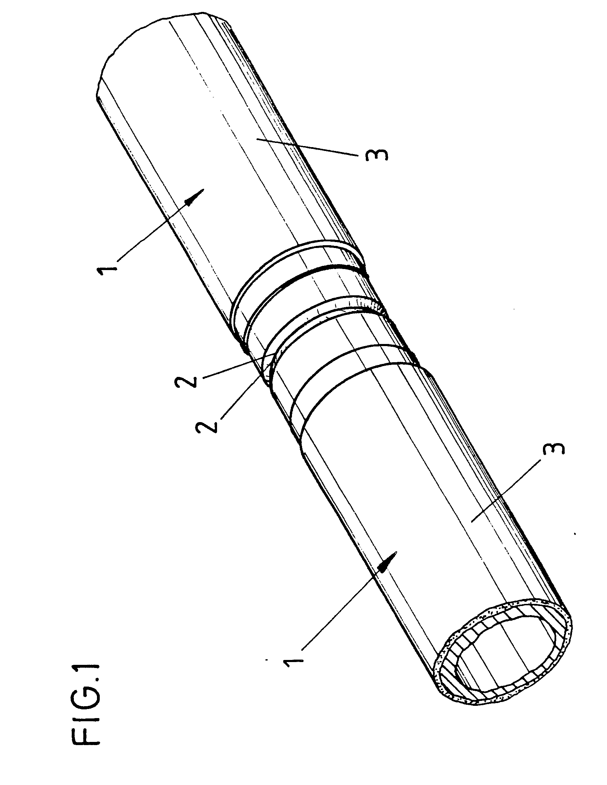

Die Fig. 1 zeigt zwei Stahlrohre 1, deren Längsachsen fluchtend miteinander ausgerichtet sind und die mit ihren Stirnenden 2 gegeneinander treten. Die Stahlrohre 1 sind mit einer Kunststoffbeschichtung 3 versehen, die jeweils einen Abstand zum zugehörigen Stirnende 2 beläßt.

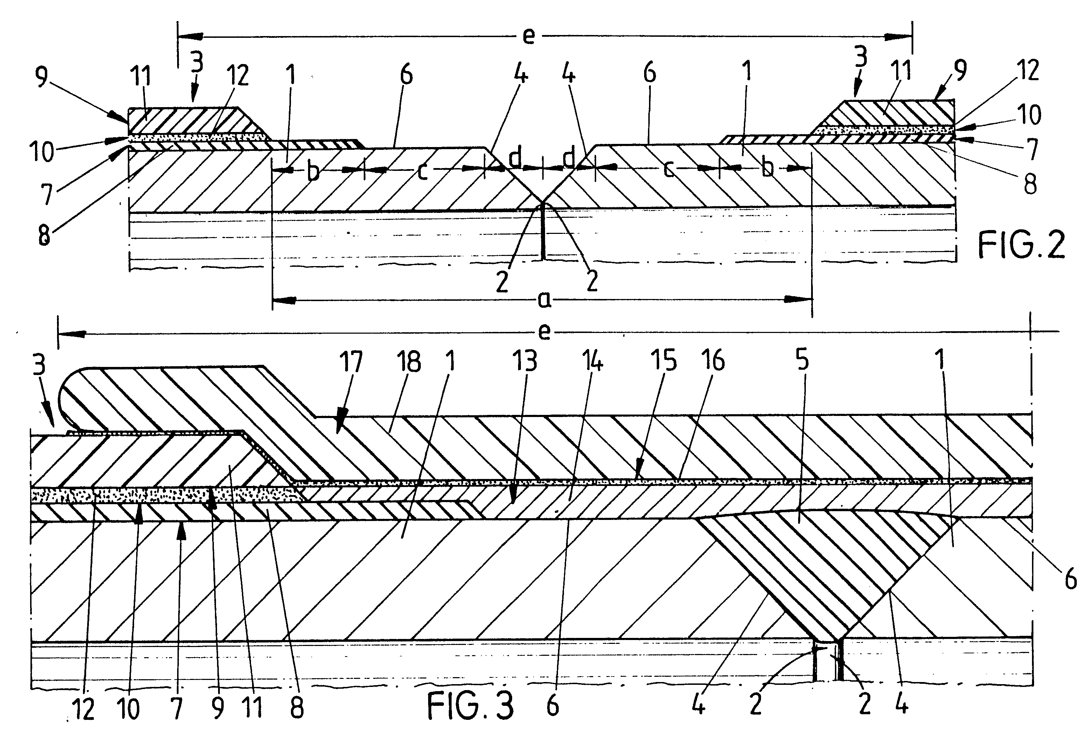

Die Fig. 2 verdeutlicht den Stoßbereich beider Stahlrohre 1. Es ist erkennbar, daß die Stirnenden 2 jeweils mit einer Fase 4 versehen sind, in die - gemäß Fig. 3 - zum Verbinden der Stahlrohre 1 eine Schweißraupe 5 gelegt wird. An jede Fase 4 jedes Rohres 1 schließt sich ein Abschnitt 6 der metallischen Rohroberfläche an, die in weiterer Entfernung von der entsprechenden Fase 4 die Kunststoffbeschichtung 3 aufweist.

Die Kunststoffbeschichtung 3 besteht aus einer duroplastischen Schicht 7, die als Epoxid-Harz-Schicht 8 ausgebildet ist und auf der metallischen Oberfläche des jeweiligen Stahlrohres 1 aufliegt. Ferner weist jede Kunststoffbeschichtung 3 eine thermoplastische Schicht 9 auf, die unter Zwischenschaltung eines Klebstoffes 10 auf die Epoxid-Harz-Schicht 8 aufgebracht ist. Bei der thermoplastischen Schicht 9 handelt es sich vorzugsweise um eine extrudierte Polyäthylen- oder Polypropylen-Schicht 11. Als Klebstoff 10 kommt mit Vorzug ein Co-Polymer 12 zum Einsatz. Dabei ist die Anordnung so getroffen, daß die Polyäthylen- oder Polypropylen-Schicht 11 in Richtung auf die Stoßstelle der beiden Stahlrohre 1 abgeschrägt verläuft und somit zu der Epoxid-Harz-Schicht 8 eine Stufe ausbildet. Dies bedeutet, daß die Epoxid-Harz-Schicht 8 jedes Stahlrohres 1 die Polyäthylen- oder Polypropylen-Schicht 11 in Richtung auf die Stoßstelle überragt. Der Klebstoff 10 befindet sich nur zwischen der thermoplastischen Schicht 9 und der duroplastischen Schicht 7, so daß auf der Oberfläche des herausragenden Abschnittes der Epoxid-Harz-Schicht 8 kein Klebstoff 10 aufgetragen ist. Die beschriebene Konfiguration ist an beiden Endbereichen der Stahlrohre 1 spiegelbildlich zur Stoßstelle vorgesehen.

Die Fig. 3 zeigt die miteinander verschweißten Stahlrohre 1 gemäß der Fig. 2, wobei die Verbindungszone e der Stahlrohre 1 mit einer Korrosionsschutzbeschichtung versehen ist. In der Fig. 3 wird lediglich der linksseitig der Schweißraupe 5 gelegene Bereich der Verbindungszone e näher gezeigt; der rechtsseitig gelegene Bereich ist jedoch spiegelbildlich identisch ausgebildet. Es ist ersichtlich, daß auf die Oberfläche der Schweißraupe 5 und auf die daran angrenzenden Abschnitte 6 der metallischen Rohroberflächen und auf die vorstehenden Abschnitte der Epoxid-Harz-Schichten 8 eine Duroplastbeschichtung 13 aufgebracht ist, die insbesondere als Epoxid-Harz-Pulverbeschichtung 14 oder - nach einem anderen Ausführungsbeispiel - als ursprünglich flüssige Epoxid-Harz-Schicht ausgebildet ist. Somit erfolgt ausgehend von der Stoßstelle jedes Stahlrohres 1 eine sich über einen Rohrverbundbereich a erstreckende duroplastische Abdeckung, wobei sich der Rohrverbundbereich a aus den hervorstehenden Abschnitten b der Epoxid-Harz-Schichten 8, den Bereichen c der metallischen Rohroberflächen und den Schweißzonen d beider Stahlrohre 1 zusammensetzt.

Auf die Duroplastbeschichtung 13 ist unter Zwischenschaltung eines Klebers 15, der vorzugsweise aus Hot-Melt 16 besteht, eine Schrumpffolie 17 aufgebracht, die vorzugsweise eine Stärke von ca. 2,5 mm aufweist. Insbesondere kommt für die Schrumpffolie 17 ein strahlenvernetztes, modifiziertes Polyäthylen 18, vorzugsweise HD-Polyäthylen, zum Einsatz. Die unter Hitzeeinwirkung aufgeschrumpfte Schrumpffolie 17 weist eine derartige Breite auf, daß die Randbereiche der Polyäthylen- oder Polypropylen-Schichten 11 beider Stahlrohre 1 überlappt werden, so daß die gesamte Verbindungszone e abgedeckt wird. Vorzugsweise kann dabei vorgesehen sein, daß die Hot-Melt-Beschichtung 16 herstellungsmäßig bereits an der Schrumpffolie 17 vorgesehen ist, so daß bei der Hitzeeinwirkung beim Aufbringen der Schrumpffolie 17 deren Aktivierung erfolgt. Die Schrumpffolie 17 kann als nahtloser Schlauch ausgebildet sein.

Das Verfahren der Beschichtung der Verbindungszone e der miteinander verschweißten Stahlrohre 1 erfolgt folgendermaßen: Zunächst werden die beiden Stahlrohre 1 miteinander verschweißt und anschließend erfolgt eine Qualitätskontrolle der gelegten Schweißnaht. Anschließend wird dann der Rohrverbundbereich a sandgestrahlt, so daß sich eine einwandfreie Oberfläche für die nachfolgende Beschichtung ergibt. Dann wird auf elektro-induktivem Wege der Rohrverbundbereich a erwärmt und die Duroplastbeschichtung 13 aufgebracht. Um einen besonders kohäsiven Verbund zu der Hot-Melt-Beschichtung 16 zu erzielen, wird für die Duroplastbeschichtung 13 ein besonders formulierter Härter verwendet. Anschließend erfolgt dann ein elektrischer Infrarot-Erwärmungsvorgang mit kontrollierter Wellenlänge über die gesamte Verbindungszone e. Dabei wird dann die Schrumpffolie 17 unter Aktivierung der an ihr befindlichen Hot-Melt-Beschichtung 16 auf die Duroplastbeschichtung 13 sowie die Randbereiche der Polyäthylen- oder Polypropylen-Schicht 11 locker über den gesamten Rohrumfang aufgelegt. Durch die Erwärmung beginnt die Folie 17 zu schrumpfen und bildet eine die Verbindungszone e fest umschlingende Hülse. Auf diese Art und Weise wird die Verbindungszone e der für die Erdverlegung oder die Off-Shore-Verlegung vorgesehenen Stahlrohre 1 mit einem dichten und besonders widerstandsfähigen Korrosionsschutzüberzug versehen.

Alle in der Beschreibung erwähnten und in der Zeichnung dargestellten Merkmale sind erfindungswesentlich, auch soweit sie in den Ansprüchen nicht ausdrücklich beansprucht sind.

## Ansprüche

1. Verfahren zur Beschichtung der Verbindungszone zweier miteinander verschweißter Stahlrohre (1), welche jeweils eine von der Schweißzone (d) beabstandete, eine thermoplastische Schicht (9) aufweisende Kunststoffbeschichtung (3) besitzen, dadurch gekennzeichnet, daß nach dem Schweißvorgang unter Wärmebeaufschlagung eine Duroplastbeschichtung (13) auf den Rohrverbundbereich (a) aufgebracht wird, die eine unterhalb der thermoplastischen Schicht (9) der Kunststoffbeschichtung (3) angeordnete, aus der thermoplastischen Schicht (9) herausragende, duroplastische Schicht (7) im Bereich des herausragenden Randes (b) und die Schweißzone (d) sowie deren angrenzende metallische Rohroberfläche (c) jedes Stahlrohres (1) abdeckt, daß ferner anschließend eine Erwärmung der gesamten Verbindungszone (e) erfolgt und daß dann eine Schrumpffolie (17) unter Zwischenschaltung eines Klebers (15) in überlappender Lage zu der Kunststoffbeschichtung (3) jedes Stahlrohres (1) auf die Duroplastbeschichtung (13) zur Abdeckung der Verbindungszone (e) aufgeschrumpft wird.

2. Verfahren nach Anspruch 1, dadurch gekennzeichnet, daß als Duroplastbeschichtung (13) eine Epoxid-Harz-Pulverbeschichtung (14) oder ein flüssiges, aushärtendes Epoxid-Harz (14) aufgebracht wird.

3. Verfahren nach einem oder mehreren der vorhergehenden Ansprüche, dadurch gekennzeichnet, daß vor der Wärmebeaufschlagung und dem Aufbringen der Duroplastbeschichtung (13) der Rohrverbundbereich (a) sandgestrahlt wird.

4. Verfahren nach einem oder mehreren der vorhergehenden Ansprüche, dadurch gekennzeichnet, daß als Schrumpffolie (17) ein strahlenvernetztes, modifiziertes Polyäthylen (18), vorzugsweise HD-Polyäthylen, aufgebracht wird.

5. Verfahren nach einem oder mehreren der vorhergehenden Ansprüche, dadurch gekennzeichnet, daß als Kleber (15) ein Heißsiegelkleber, vorzugsweise Hot-Melt (16) verwendet wird.

6. Verfahren nach Anspruch 5, dadurch gekennzeichnet, daß eine Schrumpffolie (17) verwendet wird, die herstellungsmäßig bereits mit einer aktivierbaren Hot-Melt-Beschichtung (16) versehen ist.

7. Verfahren nach einem oder mehreren der vorhergehenden Ansprüchen, dadurch gekennzeichnet, daß als duroplastische Schicht (7) der Kunststoffbeschichtung (3) der Stahlrohre (1) eine Epoxid-Harz-Schicht (8) eingesetzt wird.

8. Verfahren nach einem oder mehreren der vorhergehenden Ansprüche, dadurch gekennzeichnet, daß als thermoplastische Schicht (9) der Kunststoffbeschichtung (3) der Stahlrohre (1) eine Polyäthylen- oder Polypropylen-Schicht (11) eingesetzt wird.

9. Verfahren nach einem oder mehreren der vorhergehenden Ansprüche, dadurch gekennzeichnet, daß zwischen der duroplastischen Schicht (7) und der thermoplastischen Schicht (9) der Kunststoffbeschichtung (3) der Stahlrohre (1) ein Klebstoff (10), insbesondere ein Co-Polymer (12) aufgebracht ist.

10. Verfahren nach einem oder mehreren der vorhergehenden Ansprüche, dadurch gekennzeichnet, daß die Wärmebeaufschlagung des Rohrverbundbereiches (a) elektrisch-induktiv erfolgt.

11. Verfahren nach einem oder mehreren der vorhergehenden Ansprüche, dadurch gekennzeichnet, daß die Erwärmung der gesamten Verbindungszone (e) durch einen elektrischen Infraroterwärmungsvorgang, vorzugsweise mit kontrollierter Wellenlänge, erfolgt.

12. Verfahren nach einem oder mehreren der vorhergehenden Ansprüche, dadurch gekennzeichnet, daß für einen kohäsiven Verbund zum Kleber (15) ein abgestimmt formulierter Härter bei der Duroplastbeschichtung (13) eingesetzt wird.

13. Verfahren nach einem oder mehreren der vorhergehenden Ansprüche, dadurch gekennzeichnet, daß eine als nahtloser Folienschlauch ausgebildete Schrumpffolie (17) eingesetzt wird.

14. Mit Kunststoffbeschichtung (3) versehene, miteinander verschweißte Stahlrohre (1), deren jeweilige von der Schweißzone (d) beabstandete Kunststoffbeschichtung (3) eine thermoplastische Schicht (9) aufweist, dadurch gekennzeichnet, daß die Kunststoffbeschichtung (3) jedes Rohres (1) aus einer auf das Stahlrohr (1) aufgebrachten duroplastischen Schicht (7) und der unter Zwischenschaltung eines Klebstoffes (10) auf dieser aufgebrachten thermoplastischen Schicht (9) besteht, wobei die duro-plastische Schicht (7) in Rohrlängsrichtung von der Schweißzone (d) am Ende jedes Stahlrohres (1) beabstandet ist und in Längsrichtung auf die Schweißzone (d) die Klebstoff-Schicht (10) und die thermoplastische Schicht (9) überragt, daß eine Duroplastbeschichtung (13) auf der Schweißzone (d), der anschließenden metallischen Rohroberfläche (c) und der hervorstehenden duroplastischen Schicht (7) beider Stahlrohre (1) angeordnet ist und daß auf die Duroplastbeschichtung (13) unter Zwischenschaltung eines Klebers (15) eine Schrumpffolie (17) aufgeschrumpft ist, die die thermoplastischen Schichten (9) beider Stahlrohre (1) randseitig überlappt.

FIG.1

19543 Pa

Blome

FIG.2

FIG.3

19543 Pa

Blome

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-1 395 389 (A. CASALONGA) * Seite 1, linke Spalte, Absatz 1; Seite 1, rechte Spalte, Absatz 4; Figur 1; Seite 2, linke Spalte, Absätze 2,5 * | 1,14 | F 16 L 13/02 F 16 L 58/18 |
| A | | 4-6,8,9 ,12 | |
| Y | EP-A-0 079 610 (SEKIYUKAGAKUKOJO) * Seite 7, Zeilen 20-35; Seite 5, Zeilen 27-37; Figur 3 * | 1,14 | |
| A | | 4,11,13 | |
| A | FR-A-1 094 886 (G. BEAU DE LOMENIE et al.) * Seite 1, linke Spalte, Absatz 6; Seite 2, rechte Spalte, Absätze 2-5; Figuren 3,4 * | 1,6,14 | |
| A | EP-A-0 220 122 (HUTCHINSON) * Spalte 2, Zeilen 45-47; Spalte 5, Zeilen 2-10; Spalte 3, Zeilen 9-19; Figur 2 * | 2,5,7,3 | |
| A | FR-A-1 469 479 (W.R. HESLOP et al.) * Seite 1, linke Spalte, Absatz 2; Figur 3 * | 4,8 | |
| A | FR-A-2 588 636 (J. ALTHABEGOITY et al.) * Seite 6, Zeilen 27-35; Figur 2 * | 10 | |

RECHERCHIERTE SACHGEBIETE (Int. Cl.4)

F 16 L

Der vorliegende Recherchenbericht wurde für alle Patentansprüche erstellt

| Recherchenort | Abschlußdatum der Recherche | Prüfer |
|---|---|---|
| DEN HAAG | 26-04-1988 | ARESO Y SALINAS J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument